# EUROPEAN PATENT APPLICATION

(11) **EP 1 598 286 A1**
(43) Date of publication of application: **23.11.2005**
(21) Application number: 04708856.2
(22) Date of filing: 06.02.2004
(51) Int. Cl.: B65D 85/57

(54) **PACKAGE FOR DISKLIKE RECORDING MEDIUM**

(30) Priority: 07.02.2003 JP 2003031710
(71) Applicant: SONY CORPORATION, Tokyo 141-0001 (JP)
(72) Inventor: IRIE, Kenji, c/o Sony Corporation, Tokyo 141-0001 (JP); KANEDA, Atsushi, Yokohama-shi, Kanagawa 220-0054 (JP)
(74) Representative: Nicholls, Michael John
(86) International application number: PCT/JP2004/001282
(87) International publication number: WO 2004/069690

(57) **Abstract**

The present invention relates to a package for disc-like recording medium having a storage body made of a sheet of paper material and which is composed of a plurality of members formed by respectively folding a plurality of broken lines and in which a disc-like recording medium can be stored such that the disc-like recording medium can be freely inserted into and ejected from the package for disc-like recording medium.

In a conventional envelope with CD label window, an envelope main body and a film are made of different paper materials and problems arise, in which two kinds of paper materials should be prepared.

A package for disc-like recording medium according to the present invention has a storage body formed from a sheet of a paper material by a cutting-process and which is composed of a plurality of members formed by folding a plurality of broken lines, wherein a window portion is formed on one member to expose a CD indication plane and wherein a CD can be stored therein such that it can be freely inserted into and ejected from the package for disc-like recording medium. A plurality of members has a CD back member (11) opposing the back of the CD, a CD holder member (12) overlaid over the CD back member by folding a broken line to hold a CD thereon, a window portion (17) to expose the indication plane of the CD held on the CD holder member and a recess insertion slot (20) for a CD. A frame body member (13) overlaid over the CD holder member by folding a broken line and a CD upper surface member (14) overlaid over the frame body member by folding a broken line so as to cover the CD indication plane exposed to the window portion of this frame body member are unitarily formed as one body.

According to the present invention, a suitable medium such as a CD can be freely stored in this package for disc-like recording medium in such a manner that it can be freely inserted into and ejected from this package for disc-like recording medium. Also, it is possible for a user to reliably read indicated contents on the indication plane of the disc-like recording medium such as the CD through this window portion.

## Description

### TECHICAL FIELD

The present invention relates to a package for disc-like recording medium in which a disc-like recording medium such as a CD (Compact Disc) and a DVD (Digital Versatile Disc) can be stored so as to be inserted into and ejected freely, and particularly to a package for disc-like recording medium having a storage body made of a sheet of a recyclable paper and which is composed of a plurality of members formed by folding a plurality of broken lines.

### BACKGROUND ART

As a CD package body, an envelope with CD label window has hitherto been known, in which a window portion is formed on the front surface side of the envelope into which a CD is inserted such that a user becomes able to see an indication plane of the CD (see Cited Patent Reference 1, for example).

In this envelope with CD label window, an envelope main body is made of a recyclable paper material and a window portion through which a user can see the indication plane of the CD is formed as a circular window which is opened to the front side of the envelope main body. Then, a transparent or semi-transparent film made of a suitable paper material such as a sheet of cellophane paper is attached to the circular window of the envelope main body. [Cited Patent Reference 1]: Official Gazette of Japanese laid-open patent application No. 2002-29588 (FIGS. 1 and 2)

Also, in addition to the Cited Patent Reference 1, there is known a CD package body in which a semi-circular arc-like recess is formed on one of right and left members of a pasteboard folded in three, this member is folded and overlaid on the central member to attach the peripheral edge thereof to the central member, a CD is inserted into and held in this recess, whereafter any other member of the right and left members is overlaid on the CD indication plane to pack the CD.

However, in the case of the former envelope with CD label window (Cited Patent Reference 1), the envelope main body and the film should be made of different paper materials and therefore two kinds of paper materials should be prepared, which is cumbersome. Furthermore, since the film should be attached to the envelope main body, a problem arises, in which the attachment portion should be formed as a double structure.

Also, in the case of the latter CD package body, since this CD package body has the structure in which the semi-circular arc-like recess is formed on any one of the right and left members of the pasteboard folded in three, the CD is inserted into and held in this recess and any one of the other members of the right and left members is overlaid on the CD indication plane to pack the CD, when the CD is inserted into the semi-circular arc-like recess, the CD indication plane is hidden nearly half. Then, a problem arises, in which a user becomes unable to look at the CD indication plane.

Further, one member of the pasteboard with the semi-circular arc-like recess formed thereon has encountered with the following problem. That is, when a user holds and picks up a recess member produced by this recess, a difference in level having a thickness corresponding to a thickness of the recess member is produced on the surface of the central member of the pasteboard serving as an underlying portion on which one member of this pasteboard is overlaid. As a consequence, when the CD is inserted into and ejected from the CD package body through this semi-circular arc-like recess, there is a risk in which a recording surface of the CD will be rubbed by the corner edge of the difference in level, resulting in the recording surface being damaged.

The present invention is made in order to solve the above-described problems encountered with the prior art. Also, it is an object of the present invention to provide a package for disc-like recording medium having a storage body made of a sheet of a recyclable paper material and which is composed of a plurality of members formed by folding a plurality of broken lines, one member has a window portion to expose an indication plane of a disc-like recording medium and in which a disc-like recording medium can be stored so as to be freely inserted and ejected.

### DISCLOSURE OF THE INVENTION

In order to solve the above-mentioned problems and also to attain the above-described object, there is provided a package for disc-like recording medium having a storage body formed from a sheet of a paper material by a cutting-process and which is composed of a plurality of members formed by folding a plurality of broken lines, which has a window portion formed on one member to expose an indication plane of a disc-like recording medium and in which a disc-like recording medium is stored so as to be freely inserted and ejected. This package for disc-like recording medium is characterized in that a plurality of members has a recording medium back member opposing the back of the disc-like recording medium, a recording medium holder member overlaid over the recording medium back member to hold thereon the disc-like recording medium by folding a broken line, a window portion to expose the indication plane of the disc-like recording medium held on the recording medium holder member and a recess insertion slot for the disc-like recording medium, wherein a frame body member overlaid over the recording medium holder member by folding a broken line and a recording medium upper surface member overlaid over the frame body member by folding a broken line so as to cover a disc-like recording medium indication plane exposed to the window portion of the frame body member are unitarily formed as one body.

According to the above-mentioned package for disc-like recording medium, since the storage body is composed of a plurality of members by cutting a sheet of paper material and by folding a plurality of broken lines and the substantially circular window portion is formed on one member to expose the indication plane of the disc-like recording medium, the disc-like recording medium can be stored in the package for disc-like recording medium such that it can be freely inserted into and ejected from the package for disc-like recording medium and substantially the whole of the surface of the disc-like recording medium is not hidden so that a user can reliably read the indicated contents through the window portion.

Also, since the window portion is not covered with the film and opened and it is constructed by a sheet of cut-out paper material as a package body of a disc-like recording medium, manufacturing processes can be decreased and a manufacturing cost also can be decreased.

Further, since the fastening margins formed at both sides of the frame body member are attached to the back of the recording medium back member to form the disc-like recording medium insertion slot after the frame body member was folded and overlaid over the recording medium holder member, when the disc-like recording medium is inserted from this recording medium insertion slot, the disc-like recording medium can be inserted into and ejected from the package for disc-like recording medium without damaging the recording surface of the disc-like recording medium and the disc-like recording medium can be held on the recording medium holder member having no difference in level formed thereon. Furthermore, when the disc-like recording medium is inserted into the recording medium storage portion, since the indication plane of the disc-like recording medium is directly exposed to the window portion, it is possible for a user to easily read the whole of indicated contents printed on the indication plane.

Also, in the package for disc-like recording medium, the recording medium upper surface member further includes a pocket member to form a pocket portion on the surface of the recording medium upper surface member by folding a broken line. Also, the recording medium upper surface member has fastening margins formed at its both sides, the pocket member being attached to these fastening margins to form a pocket portion.

According to the package for disc-like recording medium, since the pocket portion is formed by using the pocket member, it is possible for a user to store a second disc-like recording medium or a desired document such as an instruction manual into the package for disc-like recording medium from the pocket slot.

Further, in the package for disc-like recording medium according to the present application, the frame body member has fastening margins formed at its both sides, the fastening margins being attached to the back of the recording medium back member to form a storage portion to store the disc-like recording medium in such a manner that the indication plane of the disc-like recording medium is exposed to the window portion when the disc-like recording medium is inserted into the storage portion from the recess insertion slot.

According to this package for disc-like recording medium, when the disc-like recording medium is stored in the recording medium storage portion formed between the recording medium holder member and the frame body member overlaid over this recording medium holder member, since the whole of the indication plane of the disc-like recording medium is exposed to the window portion of the frame member, it is possible for a user to reliably read the indicated contents.

Also, according to the package for disc-like recording medium, the recording medium holder member which serves as the underlying portion of the recess insertion slot of the disc-like recording medium has no difference in level formed from the exposed portion so that the disc-like recording medium can be inserted into and ejected from the recess insertion slot.

According to the package for disc-like recording medium, since the recording medium holder member is folded and overlaid over the recording medium back member, the difference in level can be prevented from being produced and the disc-like recording medium can be inserted into and ejected from the package for disc-like recording medium from the disc-like recording medium recess insertion slot formed by folding the frame body member while the disc-like recording medium is being in contact with the surface of the recording medium holder member. Therefore, the disc-like recording medium can be stored in the recording medium storage portion without damaging the recording surface of the disc-like recording medium.

Further, since the recording medium back member is of square and the recording medium holder member, the frame body member and the recording medium upper surface member are properly located at desired three sides of the recording medium back member, it is possible to obtain various kinds of packages for disc-like recording medium having different structures in which a plurality of members are disposed variously.

For example, the frame body member and the recording medium upper surface member are located in an opposing fashion through second and third broken lines extended in the vertical direction from a first broken line for dividing the recording medium back member and the recording medium holder member. Alternatively, one of the frame body member and the recording medium upper surface member is located through a second broken line extended in the vertical direction from a first broken line and other of the recording medium upper surface member and the frame body member is located in an opposing relation to the recording medium holder member through the third broken line extended in the vertical direction from the second broken line.

As a consequence, it is possible to provide packages for disc-like recording medium made of paper materials of variations with different layouts of a plurality of members in which the recording medium holder member, the frame body member and the recording medium upper surface member are located around the recording medium back member, the recording medium back member being used as a standard.

### BRIEF DESCRIPTION OF DRAWINGS

FIG. 1 is a development diagram of a package for disc-like recording medium according to a first embodiment of the present invention;
FIG. 2 is a diagram to which reference will be made in explaining a process for folding a plurality of construction members of the package for disc-like recording medium shown in FIG. 1 along broken lines;
FIG. 3 is a perspective view of a package for disc-like recording medium showing the state in which a disc-like recording medium is inserted into a recording medium storage portion assembled and constructed by the paper material shown in FIG. 1; and
FIG. 4 is a development diagram showing a package for disc-like recording medium according to a second embodiment of the present invention.

### BEST MODE FOR CARRYING OUT THE INVENTION

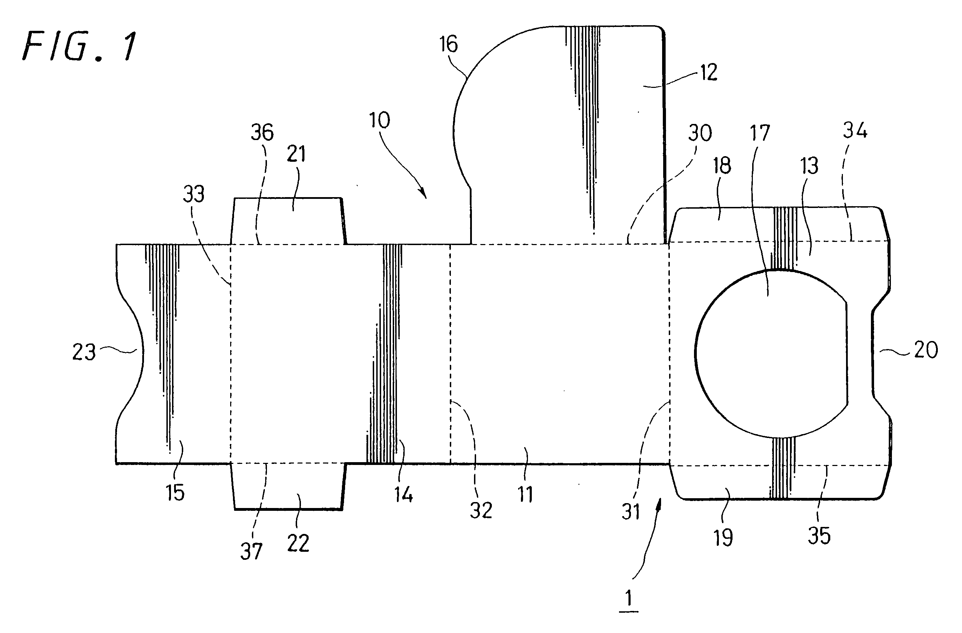

Embodiments of the present invention will be described below with reference to the accompanying drawings. FIG. 1 shows a development diagram of a package for disc-like recording medium according to a first embodiment of the present invention. A paper material 10 is formed from a sheet of a recyclable original paper by a cutting-process. The thus formed paper material 10 includes a plurality of construction members. When these construction members are folded and assembled, a CD storage body 1, which shows a specific example of a package for a disc-like recording medium is constructed.

The CD storage body 1 consisting of a plurality of construction members is composed of a CD back member 11 which shows a specific example of a recording medium back member opposing the back of a CD (compact disc) showing a specific example of a disc-like recording medium to be inserted, a CD holder member 12 which shows a specific example of a recording medium holder member overlaid over the CD back member 11 when it is folded along a first broken line 30, a frame body member 13 folded along a second broken line 31 so as to be overlaid over the CD holder member 12, a CD upper surface member 14 which shows a specific example of a recording medium upper surface member opposing the upper surface of the thus held CD when it is folded along a third broken line 32 and a pocket member 15 to form a pocket portion when it is folded along a fourth broken line 33 so as to be overlaid over the CD upper surface member 14.

The CD holder member 12 and the first broken line 30 may be located on the lower side which serves as the position opposing the CD back member 11. With this arrangement, similar effects to those of the above-described specific example can be achieved.

The CD holder member 12 has a circular arc portion 16 formed at one corner of its tip end and which becomes an underlying portion of a CD insertion slot so as to be exposed in a substantially circular form when it is overlaid over the CD back member 11.

The frame body member 13 has a substantially circular window portion 17 cut out at a nearly center portion thereof to expose the indication plane of the inserted CD. The frame body member 13 has fastening margins 18, 19 formed at both sides thereof in the width direction and it has also a recess portion 20 formed at its remaining side. When this frame body member 13 is overlaid over the CD holder member 12, the circular arc portion 16 of the CD holder member 12 and which serves as the underlying portion of the CD insertion portion is exposed so that the recess portion 20 becomes the CD insertion slot. When the CD is inserted into the CD insertion slot while the tip end of the CD is being butted against the exposed portion of this CD holder member 12, the CD can be smoothly inserted into the package for disc-like recording medium from the CD insertion slot. Then, when the CD is ejected from the package for disc-like recording medium after it was stored in the package for disc-like recording medium, since the package for disc-like recording medium has no difference in level in somewhere thereof, the CD can be smoothly ejected from the package for disc-like recording medium without trouble.

The window portion 17 is formed as a substantially circular window portion. When the inserted CD is placed on the CD holder member 12, the whole surface of the CD plane can be seen from the window portion 17 and hence the user can visually confirm the contents indicated on the CD plane with reliability.

The fastening margins 18, 19 formed at both sides of the frame body member 13 are attached to the back of the CD back member 11 by folding the fastening margins along fifth and sixth broken lines 34 and 35 after the frame body member 13 was overlaid over the CD holder member 12.

The CD upper surface member 14 has partial fastening margins 21, 22 formed at its both sides of the width direction. After these fastening margins 21, 22 were folded along seventh and eighth broken lines 36 and 37, their backs are attached to the pocket member 15. The pocket member 15 has a side serving as a pocket slot formed by a gentle curved shape 23. After the pocket was formed, a second CD or a desired document such as an instruction manual can be stored in the pocket slot.

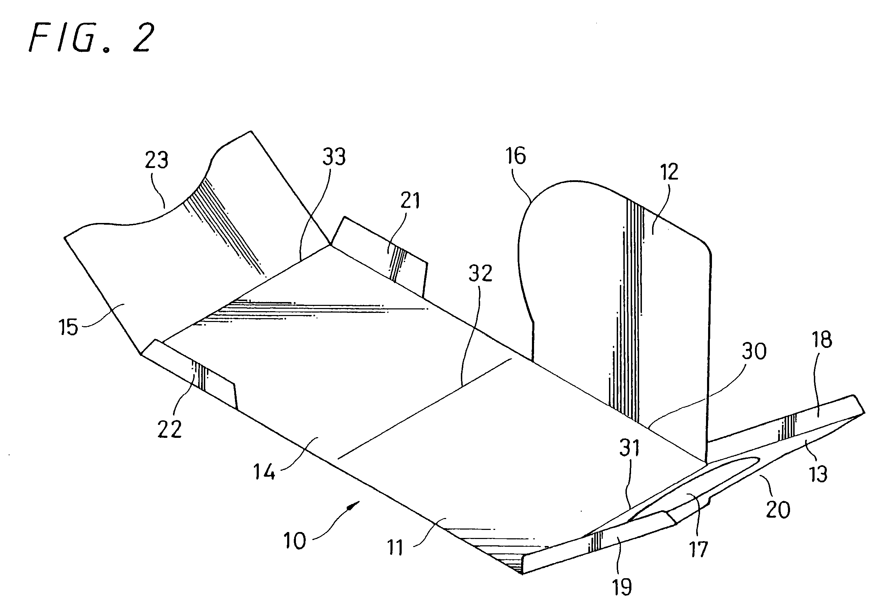

Next, the process for folding a plurality of construction members of the package for disc-like recording medium according to the first embodiment of the present invention shown in FIG. 1 along broken lines will be described with reference to FIG. 2.

FIG. 2 shows somewhere of the folding process in which the CD holder member 12 is being overlaid over the CD back member 11 by folding the CD holder member along the first broken line 31. Also, the process in which the CD holder member 12 is overlaid over the CD back member 11 so as to produce a CD storage space between the CD back member and the surface of the CD holder member and in which the frame body member 13 to form this CD storage portion is folded along the second broken line 31 is shown.

As described above, the CD storage portion is formed by folding the CD holder member and the frame body member along the first and second broken lines 30, 31, and the CD is inserted into the CD insertion slot having the recess portion 20 of the frame body member 13. As a result, the indication contents on the surface of the CD are exposed to the window portion 17 of the frame body member 13. The window portion 17 of this frame body member 13 is covered with the CD upper surface member 14 when the frame body member is folded along the third broken line 32.

Also, the pocket member 15 is folded by the fourth broken line 33 and is thereby overlaid over the CD upper surface member 14. Then, the pocket portion is formed by attaching the pocket member 15 to the fastening margins 21, 22 formed at both sides of the CD upper surface member 14.

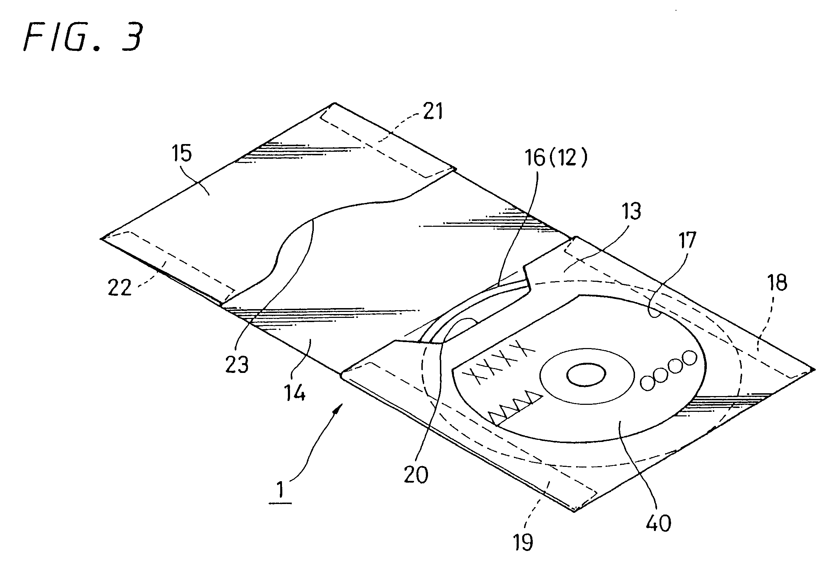

Next, the state in which a CD (disc-like recording medium) 40 is stored in a CD storage portion will be described with reference to FIG. 3. The frame body member 13 is overlaid over the CD holder member 12 and the fastening margins 18, 19 are folded and attached to the CD back member 11. Thus, there is constructed the CD storage body 1 in which the CD 40 is stored in the space between the CD holder member 12 and the frame body member 13.

At that time, the recess portion 20 of the frame body member 13 becomes the CD insertion slot in which a part of the surface of the circular arc portion 16 of the CD holder member 12 is exposed to its underlying portion.

Also, in the state in which the CD 40 is stored in the CD storage body, nearly the whole of the surface of the CD 40 is exposed to the window portion 17 of the frame body member 13. Therefore, it is possible for a user to visually recognize characters, patterns, etc. on the whole surface of the plane of the CD 40 at the first sight.

Further, the fastening margins 21, 22 of the CD upper surface 14 are folded and the pocket member 15 is attached to the backs of these fastening margins. Because the pocket member 15 has the side serving as the pocket slot formed by the gentle curved shape 23, after the pocket was formed, a second CD and a desired document such as an instruction manual can be stored in the pocket from the pocket slot.

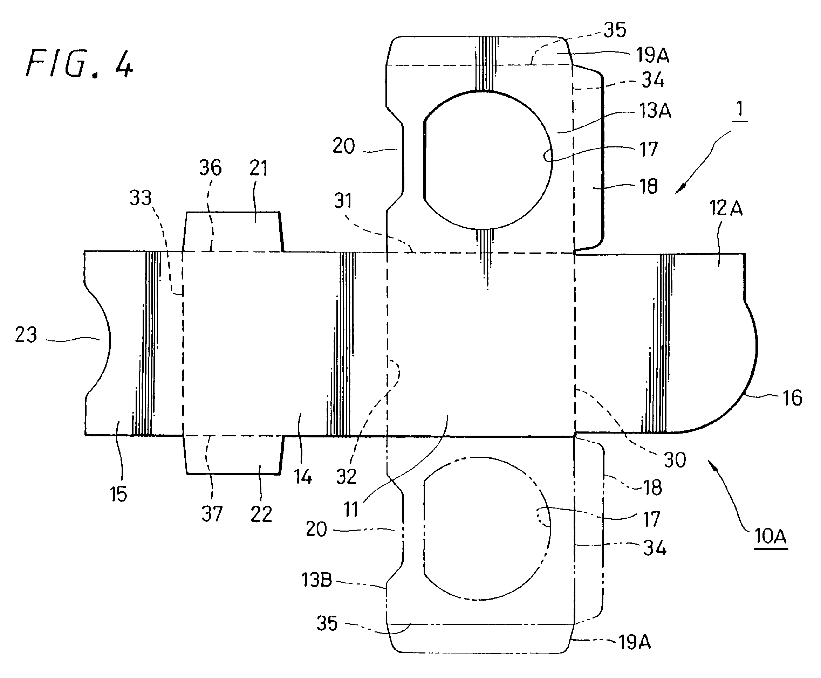

FIG. 4 is a development diagram showing a package for disc-like recording medium according to a second embodiment of the present invention. A paper material 10A shown in this embodiment is such a paper material in which the positions of the CD holder member 12 and the frame body member 13 of the paper material 10 shown in FIG. 1 are replaced with each other. In this case, the recess portion 20 of a frame body member 13A is located on the side of the CD upper surface member 14 in such a manner that the recess portion 20 can be freely opened and closed by the CD upper surface member 14 after assembly.

Specifically, the paper material 10A includes the CD back member (recording medium back member) 11, a CD holder member (recording medium holder member) 12A, a frame body member 13A, the CD upper surface member (recording medium upper surface member) 14 and the pocket member 15. The CD back member 11 is of square and it is provided with the CD holder member 12A through the first broken line 30. This CD holder member 12A has the circular arc portion 16 formed at its side opposing the first broken line 30.

The frame body member 13A is provided on one side of the CD back member 11 at the position rotated and displaced 90 degrees from the CD holder member 12A through the second broken line extended in the vertical direction from the first broken line 30. Further, the CD back member 11 has the CD upper surface member 14 formed at the position (position rotated and displaced 180 degrees from the CD holder member 12A) opposing the CD holder member 12A through the third broken line 32. Then, the CD upper surface member 14 has at it tip end side formed the pocket member 15 through the fourth broken line 33.

Although the frame body member 13A is provided with the window portion 17 and the recess portion 20 similarly to the frame body member 13 of the above-described embodiment, the recess portion 20, which serves as the CD insertion slot after assembly, is located on the frame body member at its side on the side of the CD upper surface member 14 in such a manner it can be freely opened and closed by the CD upper surface member 14. Also, although the frame body member 13A is provided with fastening margins at its two places similarly, these two fastening margins are located at remaining two sides because of a relationship between it and the recess portion 20.

Specifically, the frame body member is provided with one fastening margin 18 through the fifth broken line 34 extended in the vertical direction from the second broken line 31 and which is spaced apart from the side of the recess portion 20 with a predetermined space. Then, the frame body member is provided with the other fastening margin 19A through the sixth broken line 35 extended in the vertical direction from the fifth broken line 34 and which is located in parallel to the second broken line 32 with a predetermined space. These fastening margins 18A, 19 are respectively attached to the outer surface of the CD back member 11. Thus, it is possible to prevent stepped portions from being produced within the CD storage portion by the edges of the fastening margins 18, 19A.

Because a rest of arrangement is similar to that of the above-described first embodiment, identical elements and parts are denoted by identical reference numerals and therefore need not be described. While the case in which the frame body member 13A is located on the upper side of the CD back member 11 was described so far with reference to FIG. 4, the present invention is not limited thereto and a frame body member 13B may be located on the lower side of the CD back member 11 as shown by a dot-and-dash line in FIG. 4. According to the arrangement shown in the second embodiment, effects similar to those of the above-described embodiment can be achieved.

### INDUSTRIAL APPLICABILITY

The present invention has been described so far but the present invention is not limited to the above-described embodiments. For example, while the example in which the CD is used as the disc-like recording medium has been described so far in the above-described embodiments, it is needless to say that the present invention may be applied to other disc-like recording mediums such as a CD-ROM, a DVD and a CD-R. Further, the information signal recording system is not limited to the optical disc using light but it may be applied to a magneto- optical disc using light and magnetism, a magnetic disc using only magnetism and other disc-like recording mediums.

## Claims

1. A package for disc-like recording medium having a storage body formed from a sheet of a paper material by a cutting-process and which is composed of a plurality of members formed by folding a plurality of broken lines, which has a window portion formed on one member to expose an indication plane of a disc-like recording medium and in which a disc-like recording medium is stored so as to be freely inserted and ejected, a package for disc-like recording medium **characterized in that** said plurality of members has a recording medium back member opposing the back of said disc-like recording medium, a recording medium holder member overlaid over said recording medium back member to hold thereon said disc-like recording medium by folding a broken line, a window portion to expose the indication plane of said disc-like recording medium held on said recording medium holder member and a recess insertion slot for said disc-like recording medium, wherein a frame body member overlaid over said recording medium holder member by folding a broken line and a recording medium upper surface member overlaid over said frame body member by folding a broken line so as to cover a disc-like recording medium indication plane exposed to the window portion of said frame body member are unitarily formed as one body.

2. In a package for disc-like recording medium according to claim 1, a package for disc-like recording medium **characterized in that** said recording medium upper surface member further includes a pocket member to form a pocket portion on the surface of said recording medium upper surface member by folding a broken line.

3. In a package for disc-like recording medium according to claim 2, a package for disc-like recording medium **characterized in that** said recording medium upper surface member has fastening margins formed at its both sides, said pocket member being attached to these fastening margins to form a pocket portion.

4. In a package for disc-like recording medium according to claim 1, a package for disc-like recording medium **characterized in that** said frame body member has fastening margins formed at its both sides, said fastening margins being attached to the back of said recording medium back member to form a storage portion to store said disc-like recording medium in such a manner that the indication plane of said disc-like recording medium is exposed to said window portion when said disc-like recording medium is inserted into said storage portion from said recess insertion slot.

5. In a package for disc-like recording medium according to claim 1, a package for disc-like recording medium **characterized in that** said recording medium holder member which serves as the underlying portion of said recess insertion slot of said disc-like recording medium has no difference in level formed from the exposed portion so that said disc-like recording medium can be inserted into and ejected from said recess insertion slot.

6. In a package for disc-like recording medium according to claim 1, a package for disc-like recording medium **characterized in that** said recording medium back member is of square, said recording medium holder member, said frame body member and said recording medium upper surface member being located at desired three sides of four sides of said recording medium back member through broken lines.

7. In a package for disc-like recording medium according to claim 6, a package for disc-like recording medium **characterized in that** said frame body member and said recording medium upper surface member are located in an opposing fashion through second and third broken lines extended in the vertical direction from a first broken line for dividing said recording medium back member and said recording medium holder member and which are spaced apart from each other with a predetermined space.

8. In a package for disc-like recording medium according to claim 6, a package for disc-like recording medium **characterized in that** one of said frame body member and said recording medium upper surface member is located through a second broken line extended in the vertical direction from a first broken line for dividing said recording medium back member and said recording medium holder member and other of said recording medium upper surface member and said frame body member is located in an opposing relation to said recording medium holder member through said third broken line extended in the vertical direction from said second broken line and which is located in parallel to said first broken line with a predetermined space between it and said first broken line.
